# EUROPÄISCHE PATENTSCHRIFT

(11) **EP 1 224 547 B1**
(45) Veröffentlichungstag und Bekanntmachung des Hinweises auf die Patenterteilung: **25.02.2004**
(21) Anmeldenummer: 00987019.7
(22) Anmeldetag: 24.10.2000
(51) Int. Cl.: G06F 11/00

(54) **INTEGRIERTER ELEKTRONISCHER BAUSTEIN MIT DUPLIZIERTER KERNLOGIK UND HARDWARE-FEHLEREINSPEISUNG FÜR PRÜFZWECKE**
INTEGRATED ELECTRONIC COMPONENT WITH A DUPLICATE CORE LOGIC AND HARDWARE FAULT INJECTOR FOR TEST PURPOSES
MODULE ELECTRONIQUE INTEGRE A DOUBLE LOGIQUE CENTRALE ET INTRODUCTION D'ERREUR DE MATERIEL A DES FINS DE CONTROLE

(30) Priorität: 26.10.1999 DE 19951541
(43) Veröffentlichungstag der Anmeldung: 24.07.2002
(73) Patentinhaber: SIEMENS AKTIENGESELLSCHAFT, 80333 München (DE)
(72) Erfinder: GHAMESHLU, Majid, A-1110 Wien (AT); KRAUSE, Karlheinz, 82152 Planegg (DE)
(86) Internationale Anmeldenummer: PCT/DE2000/003748
(87) Internationale Veröffentlichungsnummer: WO 2001/031443

(56) Entgegenhaltungen:
- EP-A- 0 403 168
- WO-A-94/08292
- US-A- 5 276 690
- US-A- 5 809 040
- KANEKAWA N ET AL: "SELF-CHECKING AND FAIL-SAFE LSIS BY INTRA-CHIP REDUNDANCY" PROCEEDINGS OF THE INTERNATIONAL SYMPOSIUM ON FAULT-TOLERANT COMPUTING,US,LOS ALAMITOS, IEEE COMP. SOC. PRESS, Bd. CONF. 26, 25. Juni 1996 (1996-06-25), Seiten 426-430, XP000679307 ISBN: 0-8186-7261-7

## Beschreibung

Die Erfindung betrifft einen integrierten elektronischen Baustein mit einer Anzahl von Anschlüssen, mit zumindest zwei gleichartigen, in synchroner Betriebsart betreibbaren Kernschaltkreisen sowie mit einer Vergleichereinrichtung, welcher über Prüfeingänge die Signale einander entsprechender Ausgänge der Kernschaltkreise zum gegenseitigen Vergleich zugeführt sind und welche einen Vergleicherausgang zur Ausgabe eines Fehlersignals im Falle einer mangelhaften Übereinstimmung dieser Signale aufweist.

Bei vielen Anwendungen integrierter Bausteine (ICs), insbesondere anwendungsorientierter integrierter Bausteine (ASICs), wird aus sicherheitstechnischen Gründen eine gesteigerte Fehlersicherheit verlangt, z.B. in vermittlungstechnischen Systemen oder Verkehrsleitsteuerungen. Dies geschieht mittels einer Selbstüberwachung und Fehlererkennung innerhalb des integrierten Schaltkreises. Ein grundlegender Lösungsansatz zur Erreichung der Fehlersicherheit besteht darin, die wesentlichen Hardwareteile innerhalb des integrierten Schaltkreises zu verdoppeln. Der Schaltkreis enthält somit zumindest zwei gleichartige Ausführungen seiner Kernkomponenten. Die Betriebsweise eines so gedoppelten Schaltkreises erfolgt beispielsweise derart, dass eine der Kernkomponenten als aktive Komponente die Aufgaben des Schaltkreise ausführt, während die andere Kernkomponente passiv ist und im Leerlauf arbeitet: oder beide Kernkomponenten arbeiten mikrosvnchronisiert parallel in einem "Tandembetrieb".

In der WO 94/08292 A1 ist eine gedoppelte Prozessorsteuereinheit beschrieben, bestehend aus zwei identischen, miteinander verbundenen Steuereinheiten mit je einer Prozessoreinheit, einem RAM-Datenspeicher und Peripherie-Schaltkreisen. Jede Prozessoreinheit ist dazu eingerichtet festzustellen, ob sie aktiv oder im Standby-Betrieb ist. Die aktive Prozessoreinheit führt die Schreibzyklen auf den RAM-Speicher synchron in beiden gedoppelten RAM-Speichern oder in einen der beiden RAM-Speicher durch. Die Standby-Einheit bleibt im Standby bis sie aufgrund einer Störung der aktiven Einheit aufgerufen wird, um die bisher aktive Einheit zu ersetzen. Die Aktivitäten der beiden Prozessoreinheiten nach der WO 94/08292 A1 sind somit grundsätzlich asymmetrisch und diese Art der Doppelung ist somit gegenüber dem Gegenstand der Erfindung gattungsfremd.

Jede der beiden Prozessoreinheiten der WO 94/08292 A1 ist darüber hinaus mit zwei Mikroprozessoren ausgestattet, die in mikrosynchronisiertem Modus arbeiten. Die Mikrosynchronität der beiden Mikroprozessoren wird mittels eines Vergleicherblocks überwacht, der zu jedem Zeitpunkt die Identität der Adressen-, Daten- und Steuersignale der beiden Prozessoren überprüft; eine Abweichung wird als Störung der betreffenden Prozessoreinheit interpretiert. Ein Fehler im mikrosynchronen Betrieb des Mikroprozessorpaares führt somit zu einem Interrupt-Signal bzw. Reset für die gesamte Prozessoreinheit. Die Doppelung der Mikroprozessoren innerhalb einer Prozessoreinheit führt zu einer "Tandemeinheit", die von einem einheitlichen Taktsignal versorgt wird.

Ein anderer für die Erfindung bedeutsamer Aspekt der Fehlersicherheit - der in der genannten WO 94/08292 A1 freilich nicht behandelt ist - betrifft die Überprüfung des Verhaltens im Fehlerfalle mit Hilfe einer Hardware-Fehlereinspeisung. Für Testzwecke von elektronischen Geräten, insbesondere bei der Abnahme vom Hersteller durch den Kunden, werden unter anderem Hardware-Fehler simuliert und das korrekte Ansprechen des Gerätes bei dem Auftreten eines solchen Fehlers kontrolliert. Hierbei werden etwa Unterbrechung von Leitungen oder Steckkontakten, Kurzschlüssen, Vertauschungen u.dgl. simuliert. Gewöhnlich richtet sich der Test dahin, ob und inwieweit in dem Gerät ein solcher Fehler zuverlässig erkannt, lokalisiert, auf seine möglichen Ursachen zurückgeführt und schließlich gemeldet wird. Fehlereinspeisungen können beispielsweise mit Hilfe von Zwischenadaptern, Schaltern, Jumper, Spezialbaugruppen, Extra-Busse und vielfältige andere Methoden realisiert werden. Bei allen diesem Methoden wird durch Verstellen der Schalter, Einstecken der Spezialbaugruppen, usf. ein funktionaler Hardware-Fehler eingespeist, z.B. Invertierung von Daten oder Adressen, Erzeugung eines Interrupts und andere ähnliche Fehler.

In der DE 197 35 163 A1 der Anmelderin ist die Simulierung von Hardware-Fehlern auf einem integrierten elektronischen Baustein mit zumindest einer Hardware-Fehlereinspeisung mittels einer Steuerlogik beschrieben, welche dazu eingerichtet ist, Befehlssignale, welche über einen auf einen Baustein-Anschluss herausgeführten Dateneingang eingegeben werden, zu decodieren, daraus Befehle zur Fehlersteuerung abzuleiten und aufgrund dessen Fehlersteuersignale an zumindest einen Fehlersteuerungs-Ausgang zu legen, der mit einem Signaleingang der Fehlereinspeisung(en) verbunden ist. Hierbei kann die Steuerlogik insbesondere als Teil einer Boundary-Scan-Testlogik des Bausteins und der Dateneingang als Testdateneingang der sogenannten TAP-Schnittstelle der Boundary-Scan-Testlogik ausgeführt sein.

Der Boundary-Scan, zu Deutsch soviel wie Grenzprüfung, beruht auf dem IEEE-Standard 1149-1 und dient als im Baustein integrierte, standardisierte Testlogik für den Baustein- und Baugruppentest, wie z.B. in dem Buch 'Boundary-Scan Test: A Practical Approach', H. Bleeker, P. van den Eijnden und F. de Jong, Dordrecht, Boston, Kluwer Academic Publishers 1993, ISBN 0-7923-9296-5, im Detail beschrieben. Die primären Ziele des Boundary-Scan sind der Test der Verbindungen zwischen den ICs, die Beobachtung von Signalen an den IC-Anschlüssen während der normalen Betriebsfunktion und Steuerung des Selbsttests eines ICs. Bei heutzutage erhältlichen ICs und insbesondere ASICs ist der Boundary-Scan üblicherweise bereits implementiert.

Die DE 197 35 163 A1 beschreibt freilich die Boundary-Scanunterstützte Fehler-Einspeisung lediglich für den Fall eines einfachen ASICs; die Möglichkeit einer gedoppelten Anwendungslogik ist darin nicht berücksichtigt. Es besteht jedoch im Falle gedoppelter Bausteine zusätzlich ein Bedürfnis, für die Überprüfung der zuverlässigen Erkennung einer Abweichung der gedoppelten Bausteinkomponenten voneinander hierfür entsprechende Fehler einspeisen zu können. Grundsätzlich wäre eine derartige Überprüfung gedoppelter Bausteine, z.B. mikrosynchroner Prozessoren nach der WO 94/08292, mittels einer Fehlereinspeisung gemäß der DE 197 35 163 A1 dadurch zu erreichen, dass z.B. nur in einen der beiden Prozessoren ein Fehlersignal eingespeist wird - diese Fehlereinspeisungen können z.B. interne Leitungen oder insbesondere Ausgangsleitungen der Prozessoren bzw. der gedoppelten Kernkomponenten sein - oder in beide Prozessoren verschiedene Fehlersignale eingespeist werden; das korrekte Eintreten eines Fehlerzustandes wird dann überprüft. Dieses Verfahren ist jedoch naturgemäß indirekt und erschwert oftmals die Analyse von Fehlfunktionen; dies bringt lange Testzeiten mit sich und macht die Überprüfung auf Fehlersicherheit aufwendig.

Eine andere, insbesondere dem IEEE-Standard 1149-1 gemäße Möglichkeit zur gezielten Überprüfung der Vergleicherfunktionen wäre die Einführung von Boundary-Scan-Zellen für sämtliche Ausgänge aller gedoppelter Komponenten. Dies würde jedoch die Zahl der Ausgangszellen beträchtlich steigern und somit, insbesondere wenn es sich um sehr viele Kernsschaltkreis- und folglich auch Vergleicher-Ausgänge handelt, zu einem sehr hohen Hardware-Aufwand führen sowie die Testzeiten deutlich verlängern, insbesondere das Auslesen dieser Ausgangszellen.

Das Dokument US-A-5 276 690 offenbart eine Schaltung mit zwei synchron betriebenen Kernschaltkreisen. Eine Vergleichereinrichtung erhält über Prüfeingänge die Signale einander entsprechender Ausgänge der Kernschaltkreise zum Vergleich und bildet ein Gesamtfehlersignal.

Es ist daher Aufgabe der in Anspruch 1 definierten Erfindung, eine verbesserte Fehlereinspeisung für ICs mit gedoppelten Komponenten finden. Im besonderen soll eine direkte Kontrolle der Fehlerverarbeitung und eine Lokalisierung der fehlerhaften Komponente im Falle einer Abweichung der gedoppelten Komponenten voneinander möglich sein.

Die gestellte Aufgabe wird von einem integrierten elektronischen Baustein der eingangs genannten Art gelöst, mit zumindest einer Hardware-Fehlereinspeisung für Prüfzwecke, wobei zumindest einem der Prüfeingänge der Vergleichereinrichtung eine Fehlereinspeisung vorgeschaltet ist, welche von zumindest einem Fehlersteuereingang ansteuerbar ist.

Diese Lösung erfüllt die gestellte Aufgabe auf einfache und dennoch effektive Weise. Dies gelingt durch die erfindungsgemäße Einspeisung von Fehlern nicht in die eigentliche Anwendungslogik, sondern in die Vergleichereinrichtung, und zwar im speziellen in die von den Ausgangsleitungen der gedoppelten Kernkomponenten abgeleiteten Prüfeingänge der Vergleichereinrichtung. Dadurch ist es möglich, zum einen die Zahl der Boundary-Scan-Ausgangszellen niedrig zu halten, zum anderen eine zuverlässige und differenzierte Fehlereinspeisung und -analyse durchzuführen.

Eine bevorzugte Ausführungsform der Erfindung hat eine Grenzprüfungs-Testlogik mit einer Anzahl von Grenzprüfungs-Ausgangszellen, deren Eingänge jeweils mit einem Ausgang eines der Kernschaltkreise und deren Ausgänge mit aus dem Baustein als Signalausgänge herausgeführten Anschlüssen verbunden sind, sowie zumindest ein von der Grenzprüfungs-Testlogik angesteuertes Multiplexermittel, über welches ein in der Vergleichereinrichtung aus Prüfeingängen abgeleitetes Vergleichsergebnissignal einer Grenzprüfungs-Ausgangszelle eingespeist ist. Dies ermöglicht ein Auslesen von Ausgangssignalen der Vergleichereinrichtung über die Ausgangszellen des Boundary-Scans, liefert somit differenzierte Information über verschiedene Signale der Vergleichereinrichtung.

Hierbei ist es vorteilhaft, wenn die Vergleichereinrichtung zumindest ein Vergleichermittel aufweist, welchem einander entsprechende Ausgänge der Kernschaltkreise, nämlich jeweils ein Ausgang jedes Kernschaltkreises, als Prüfeingänge zugeführt sind und von welchem her ein aus dem Vergleich dieser Ausgänge untereinander bestimmtes Vergleichsergebnissignal über ein Multiplexermittel einer Grenzprüfungs-Ausgangszelle eingespeist ist. Diese Vergleichermittel können insbesondere für jeden Ausgang der Kernschaltkreise vorgesehen sein.

Eine weitere vorteilhafte Ausbildung der Erfindung, welche eine einfache und flexible Ansteuerung der erfindungsgemäßen Fehlereinspeisungen gestattet und zudem eine beträchtliche Rationalisierung des Testvorgangs ermöglicht, hat eine Steuerlogik, die zumindest einen aus dem Baustein herausgeführten Anschluss als Dateneingang zur Eingabe von Befehlssignalen an die Steuerlogik sowie zumindest einen Fehlersteuerungs-Ausgang, der mit einem Fehlersteuereingang verbunden ist, aufweist, wobei die Steuerlogik dazu eingerichtet ist, die über den Dateneingang eingegebenen Befehlssignale zu decodieren, daraus Befehle zur Fehlersteuerung abzuleiten und entsprechend diesen Befehlen an den zumindest einen Fehlersteuerung-Ausgang zu legen.

Hierbei ist es insbesondere günstig, wenn die Steuerlogik als Teil der Grenzprüfungs-Testlogik des Bausteins und der Dateneingang als Testdateneingang einer Testschnittstelle der Grenzprüfungs-Testlogik ausgeführt ist. Dies verringert nicht nur den Hardware-Aufwand, sondern verbessert auch durch die Verwendung der normierten Schnittstelle des Boundary-Scan die Logistik des Bausteintests.

Günstigerweise steuert zumindest ein Fehlersteuereingang eine Gruppe von Fehlereinspeisungen an, nämlich die Fehlereinspeisungen von Prüfeingängen für parallele Ausgänge eines der Kernschaltkreise. Dadurch kann in einem Testschritt die Vergleicherfunktion für die gesamte Zahl von Ausgängen eines Kernschaltkreises überprüft werden. Hierbei kann vorteilhafterweise für jeden der Kernschaltkreise jeweils ein Fehlersteuereingang vorgesehen sein, welcher eine Gruppe von Fehlereinspeisungen ansteuert.

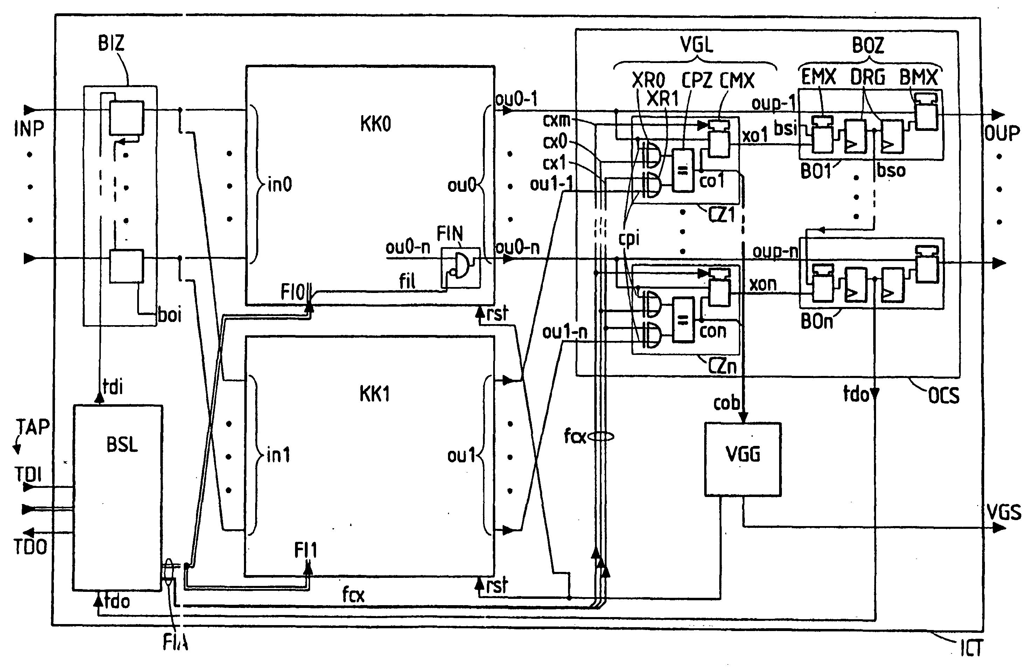

Im folgenden wird die Erfindung an einem Ausführungsbeispiel betreffend einen gedoppelten ASIC-Baustein näher erläutert, welcher in dem Schaltungsschema der beigefügten Figur veranschaulicht ist.

In dem ASIC-Baustein ICT ist die Anwendungslogik gedoppelt in Form zweier Kernschaltkreise KK0,KK1 realisiert. Der ASIC-Baustein weist eine Anzahl von Anschluss-Pins INP,OUP auf, wobei die Eingangsanschlüsse INP nach bekannter Art den Eingängen in0,in1 beider Kernschaltkreise zugeführt sind, jedoch nur ein Ausgangssatz ou0 des einen Kernschaltkreises KK0 ("primärer" Kernschaltkreis) über die Ausgangsanschlüsse OUP aus dem Baustein herausgeführt ist. Der Ausgangssatz ou0 umfasst n Ausgänge ou0-1 bis ou0-n, von denen in der Figur lediglich der erste und der letzte gezeigt sind; gleiches gilt für die den Ausgängen zugeordneten Komponenten. Die Ausgänge ou1 des anderen ("sekundären") Kernschaltkreises KK1 dienen lediglich der Überprüfung auf den fehlerfreien Betrieb mittels einer Vergleichereinrichtung VGL wie weiter unten ausführlich dargestellt ist. Die Kernschaltkreise KK0,KK1 arbeiten parallel, beispielsweise in mikrosynchroner Betriebsart aufgrund eines gemeinsamen Taktsignales. (Die Taktversorgung der Komponenten des ASIC-Bausteins ICT ist der Übersichtlichkeit halber in der Figur nicht gezeigt.)

Der ASIC-Baustein weist des weiteren eine Boundary-Scan-Testlogik auf, welche eine Steuerlogik BSL, eine aus dem Baustein ICT herausgeführte Testschnittstelle TAP sowie Boundary-Scan-Eingangzellen BIZ und Boundary-Scan-Ausgangszellen BOZ aufweist. Die Testschnittstelle TAP ('Test Access Port') ist in Übereinstimmung mit dem IEEE-Standard 1149-1 eine serielle Schnittstelle. Diese dient ausschließlich Prüfzwecken und umfaßt vier Anschlüsse TDI, TMS, TCK und TDO sowie einen optionalen Reset-Eingang TRST (in der Figur sind nur die Anschlüsse TDI und TDO explizit gezeigt). Über die Testschnittstelle TAP werden ein Zustandsautomat mit beispielsweise 16 Zuständen, der sogenannte TAP-Controller, gesteuert, Befehle seriell in ein Befehlsregister geschoben, sowie Testund Identifikationsdaten hinein- bzw. herausgeschoben, wobei der Testdateneingang TDI sowie -ausgang TDO zum Hinein- bzw. Herausschieben von Daten und Befehlen der Boundary-Scan-Zellen BIZ,BOZ sowie für das erwähnte Befehlsregister vorgesehen sind.

Die Verwendung des Boundary-Scan für Fehlereinspeisungen geht aus der DE 197 35 163 A1 hervor, deren Inhalt einen Teil dieser Offenbarung darstellt. Wie dort näher beschrieben ist, weist die Boundary-Scan-Steuerlogik BSL zusätzliche Fehlersteuerungs-Ausgänge FIA auf, die mit in der Anwendungslogik vorgesehenen Fehlereinspeisungen verbunden sind und diese ansteuern, um so Fehler einzuspeisen; im Falle gedoppelter Anwendungslogik werden z.B. jeder Kernkomponente KK0,KK1 jeweils eine Anzahl von Fehlersteuerungs-Ausgängen FI0, FI1 zugeführt. Beispielsweise kann, wie in der Figur am Beispiel des letzten Ausgangs ou0-n des ersten Kernschaltkreises KK0 gezeigt, eine Unterbrechung dieser Ausgangsleitung mit Hilfe einer Fehlereinspeisung FIN simuliert werden, wobei ein Fehlersteuerungs-Ausgang fil dem Signaleingang der Fehlereinspeisung, nämlich dem invertierten Eingang des UND-Gatters, zugeführt ist.

Eine bestimmte Anzahl der Befehlskombinationen des Befehlsregisters der Boundary-Scan-Steuerlogik ist für die Boundary-Scan-Prüfung und zugehörige Tests, wie etwa der IC-Selbsttest, reserviert. Die nicht für den Boundary-Scan genutzten Befehle stehen für Erweiterungen zur Verfügung. Einige dieser erweiterten Befehle werden entsprechend der DE 197 35 163 A1 dazu benutzt, die Funktion des ICs über die Fehlereinspeisungs-Ausgänge FI0,FI1 zu beeinflussen oder zu verfälschen.

Ein derartiger erweiterter Befehl fungiert somit als Fehlersteuerungsbefehl, in dem oben diskutierten Beispiel zur Unterbrechung des Ausgangssignals ou0-n der Komponente KK0.

Jede Eingangs- und Ausgangsleitung der Anschlusspins INP,OUP sind über jeweils eine Boundary-Scan-Eingangs- bzw. Ausgangszelle BIZ,BOZ geführt. Die Zellen BIZ,BOZ sind gemäß der Boundary-Scan-Architektur untereinander nach Art einer Schieberegister-Kette verbunden. In die so gebildete Kette können Daten über einen Eingang tdi (der von dem Testdateneingang TDI der Testschnittstelle TAP abgezweigt ist) eingeschoben werden, sowie aus ihr Daten entsprechend dem Belegungszustand der Kernkomponenten-Anschlüsse INP,OUP über einen Ausgang tdo ausgeschoben; der Ausgang tdo ist im übrigen auf den Testdatenausgang TDO der Testschnittstelle TAP gelegt. (Die Verbindung des Kettenausgangs boi der letzten Eingangszelle mit dem Ketteneingang bsi der ersten Ausgangszelle BO1 ist in der Figur der Übersichtlichkeit halber nicht gezeigt.)

Die Boundary-Scan-Ausgangszellen BOZ gehören zu einer Ausgangsprüfungseinrichtung OCS, welcher außerdem die oben erwähnte Vergleichereinrichtung VGL zugehört. Die Vergleichereinrichtung VGL des gezeigten Ausführungsbeispieles weist eine Anzahl von Vergleichermitteln CZ1,...,CZn auf, entsprechend der Anzahl der Ausgänge ou0-1,...,ou0-n einer Komponente KK0 bzw. KK1. Jedem Vergleichermittel sind einander entsprechende Ausgänge der Kernschaltkreise KK0,KK1 als Prüfeingänge cpi zum Zwecke des Vergleichs der Prüfeingänge, also dieser Ausgänge untereinander zugeführt. Der Aufbau der Vergleichermittel CZ1,...,CZn ist im folgenden anhand des ersten Vergleichermittels CZ1 erläutert, wobei die übrigen Vergleichermittel einen analogen Aufbau aufweisen.

Das Vergleichermittel CZ1 weist zwei Prüfeingänge cpi auf, die jeweils von einander entsprechenden Ausgängen - in diesem Fall dem jeweils ersten Ausgang ou0-1 bzw. ou1-1 - der beiden Kernkomponenten KK0, KK1 versorgt sind. Einer - z.B. mittels eines XOR-Registers realisierten - Komparatorzelle CPZ sind die genannten Prüfeingänge cpi zugeführt; sie liefert ein Vergleichsergebnissignal co1, welches im Falle einer mangelnden Übereinstimmung der Signale der Prüfeingänge einen Fehlerwert (z.B. einen vordefinierten High-Pegel) annimmt. Die Vergleichsergebnissignale co1,...,con der Vergleichermittel werden zusammengefasst, z.B. in Form eines Busses cob, und einer Vergleicherauswertung VGG zugeführt, in welcher die Vergleichssignale cob ausgewertet werden, zweckmäßigerweise mittels einer ODER-Verknüpfung. Sofern ein Vergleichsfehler ermittelt wird, speichert die Vergleicherauswertung VGG das Ergebnis und löst nach bekannter Art über einen Ausgang VGS einen Fehleralarm aus, beispielsweise mittels eines Interrupts oder eines Resets über eine entsprechenden Interrupt/Reset-Eingang rst der Kernkomponenten KK0,KK1.

Gemäß der Erfindung weisen die Prüfeingänge cpi des Vergleichermittels CZ0 - und zweckmäßigerweise ebenso die der übrigen Vergleichermittel - Fehlereinspeisungen XR0,XR1 auf. Diese sind in dem gezeigten Beispiel mittels XOR-Gatter realisiert, durch welches eine Signalinversion realisierbar ist; freilich wären ebenso andere Schaltungsformen wie z.B. ein UND-Gatter (Leitungsunterbrechung) denkbar. Es sei hierbei hervorgehoben, dass die Fehlereinspeisungen den Prüfeingängen cpi der Vergleicher vorgeschaltet sind und nicht etwa in die Signalleitungen oup-1,...,oup-n der Ausgangssignale. Auf diese Weise ist gemäß dem Erfindungsgedanken eine Überprüfung der Vergleicherfunktionen unabhängig von dem Betrieb der Kernkomponenten KK0,KK1 möglich.

Die Fehlereinspeisungen XR0,XR1 werden durch Fehlersteuereingänge cx0,cx1 angesteuert. In dem gezeigten Ausführungsbeispiel werden jeweils alle jene Prüfeingänge, welche Ausgängen einer Kernkomponente entsprechen, durch einen gemeinsamen Fehlersteuereingang versorgt. So ist z.B. der Fehlersteuereingang cx0 mit jenen Fehlereinspeisungen XR0 verbunden, deren Prüfeingang mit einem Ausgang ou0-1,...,ou0-n der Kernkomponente KK0 verbunden ist; entsprechendes gilt für den Fehlersteuereingang cx1 hinsichtlich der anderen Kernkomponente KK1 bzw. der zugeordneten Fehlereinspeisungen XR1. Die Fehlersteuereingänge cx0,cx1 sind günstigerweise als Fehlersteuerungs-Ausgänge der Boundary-Scan-Steuerlogik BSL realisiert. Auf diese Weise können mit Hilfe der Boundary-Scan-Architektur, also ohne die Verwendung zusätzlicher Anschlüsse od.dgl., Signalverfälschungen in Hinblick auf die Komparatoren für jeweils eine der beiden Kernkomponenten eingespeist werden.

Zufolge der Erfindung ist des weiteren für jeden Vergleicher CZ1,...,CZn ein zusätzlicher Multiplexer CMX vorgesehen, über welchen das Vergleichsergebnissignal co1, ..., con der betreffenden Boundary-Scan-Ausgangszelle BO1, ..., BOn zugeführt werden kann. Dies kann (wiederum nur am Beispiel des ersten Vergleichers CZ1 und der ersten Zelle BO1) beispielsweise dadurch realisiert sein, dass dem ersten Multiplexer EMX der Ausgangszelle BO1 anstelle des Ausgangssignals ou0-1 ein Signal xo1 zugeführt wird, das dem zugeordneten Vergleichsergebnis-Multiplexer CMX entstammt und aus dem Ausgangssignal ou0-1 einerseits und dem Vergleichsergebnissignal co1 andererseits gemultiplext ist. Der erfindungsgemäße Umstand, dass dem Vergleichermittel CZ1 eine Boundary-Scan-Ausgangszelle BO1 direkt nachgeschaltet ist, ermöglicht ein Auslesen des Vergleicherzustandes co1 auf einfache Weise über den Boundary-Scan. Die Verwendung des Multiplexers CMX vermeidet hierbei, dass eine zusätzliche Boundary-Scan-Zelle eingeführt werden müsste. Im übrigen entspricht der in der Figur gezeigte Aufbau der Ausgangszellen BO1,...,BOn, insbesondere hinsichtlich der D-Register DRG und des Endmultiplexers BMX, dem in dem IEEE-Standard 1149-1 vorgeschlagenen Aufbau einer Boundary-Scan-Ausgangszelle.

Der Vergleichsergebnis-Multiplexer CMX ist über einen Multiplexersteuereingang cxm angesteuert. In dem gezeigten Ausführungsbeispiel sind die Multiplexersteuereingänge cxm der Vergleichermittel CZ1,...,CZn - ebenso wie die Fehlersteuereingänge cx0, cx1 - von einem gemeinsamen Fehlersteuerungs-Ausgang der Boundary-Scan-Steuerlogik BSL versorgt. Diese Signale cx0,cx1,cxm stellen eine Vergleicherfehlersteuerung fcx dar, welche die Einspeisung von Vergleicherfehlern und deren Auslesen über die Boundary-Scan-Architektur ermöglicht.

Die Boundary-Scan-Steuerlogik wird um drei Fehlersteuerungsbefehle im Sinne der DE 197 35 163 A1 erweitert, wobei bei allen diesen drei Befehlen die Vergleicherergebnisse co1,...,con über die Boundary-Scan-Zellen BOZ in ein Boundary-Scan-Register ausgelesen werden:
- FAULT_INJECTION_0 = Fehlereinspeisung für die "primäre" Kernkomponente KK0 des Bausteins ICT. Dies geschieht über den Fehlersteuereingang cx0, welcher aktiviert wird; alle den Ausgängen ou0 entsprechenden Prüfeingänge der Komparatoren CPZ werden invertiert, sodass die Ergebnissignale co1,...,con aller Vergleichermittel den Fehlerwert annehmen. Gleichzeitig wird durch diesen Befehl der Multiplexersteuereingang cxm aktiviert, sodass die Signaleingänge xo1,...,xon mit den Vergleichsergebnissignalen co1,...,con versorgt werden. Die Vergleichsergebnissignale können dann nach bekannter Art wie z.B. gemäß dem sogenannten EXTEST des Boundary-Scans mittels der Boundary-Scan-Zellen BO1,...,BOn zwischengespeichert (CAPTURE_DR) und über den Ausgang tdo ausgetaktet (SHIFT_DR) werden. Auf diese Weise ist eine Überprüfung der Vergleicherfunktion insbesondere mit einer Lokalisierung einer fehlerhaften Zelle möglich.
- FAULT_INJECTION_1 = Fehlereinspeisung für die "sekundäre" Kernkomponente KK1. Dies geschieht mittels des Fehlersteuereingangs cx1; im übrigen entspricht dieser Befehl dem vorangegangenen.
- COMPARE_EXTEST = Auslesen der Komparatoren über die Boundary-Scan-Ausgangszellen ohne Fehlereinspeisung. Hierbei werden die Fehlersteuereingänge cx0,cx1 nicht aktiviert; dieser Befehl liefert somit eine Überprüfung und Lokalisierung der Komparatoren in der normalen Funktion, und kann auch ohne Beeinträchtigung der ASIC-Funktion im vollen Betrieb verwendet werden. Somit wird durch diesen Befehl lediglich der Multiplexersteuereingang cxm aktiviert, sodass die Signaleingänge xo1,...,xon mit den Vergleichsergebnissignalen co1,...,con versorgt werden. Die Vergleichsergebnissignale können dann wie oben mittels der Boundary-Scan-Zellen BO1,...,BOn zwischengespeichert und ausgetaktet werden.
Selbstverständlich sind die Namen der drei erweiterten Befehle (FAULT_INJECTION_0, FAULT_INJECTION_1, sowie COMPARE_EXTEST) lediglich beispielhafter Natur.

Die Boundary-Scan-Testlogik liegt nicht in gedoppelter Form vor. Dies vermindert die Verdoppelungsgüte des ASIC-Bausteins nicht, da der Boundary-Scan-Test sowie die Fehlereinspeisung nur für den Testfall vorgesehen und im Normalbetrieb die Boundary-Scan-Logik nicht aktiviert ist.

## Patentansprüche

1. Integrierter elektronischer Baustein (ICT) mit einer Anzahl von Anschlüssen (INP,OUP), mit
- zumindest zwei gleichartigen, in synchroner Betriebsart betreibbaren Kernschaltkreisen (KK0,KK1) sowie mit einer Vergleichereinrichtung (VGL), welcher über Prüfeingänge (cpi) die Signale einander entsprechender Ausgänge (ou0-1, ou1-1; ...; ou0-n,ou1-n) der Kernschaltkreise (KK0,KK1) zum gegenseitigen Vergleich zugeführt sind welche die lokalen Vergleichsergebnissignale (co1-con) zusammenfaßt und welche einen Vergleicherausgang (vgs) zur Ausgabe eines Fehlersignals im Falle einer mangelhaften Übereinstimmung dieser Signale aufweist,
- eine Hardware-Fehlereinspeisung (XR0,XR1) für Prüfzwecke für jede Gruppe einander entsprechenden Ausgänge den Kernschaltkreise, wobei zumindest einem der Prüfeingänge (cpi) der lokalen Vergleichereinrichtung eine Fehlereinspeisung (XR0,XR1) vorgeschaltet ist, welche von zumindest einem Fehlersteuereingang (cx0,cx1) ansteuerbar ist,
- eine Grenzprüfungs-Testlogik mit einer Anzahl von Grenzprüfungs-Ausgangszellen (BO1, ...,BOn), deren Eingänge (oup-1,...,oup-n) jeweils mit einem Ausgang (ou0-1,...,ou0-n) eines der Kernschaltkreise und deren Ausgänge mit aus dem Baustein (ITC) als Signalausgänge herausgeführten Anschlüssen (OUP) verbunden sind, sowie
- ein von der Grenzprüfungs-Testlogik angesteuertes Multiplexermittel (CMX), über welches für jede Gruppe einander entsprechenden Ausgänge den Kernschaltkreise ein in der Vergleichereinrichtung (VGL) aus Prüfeingängen (cpi) abgeleiteteslokales Vergleichsergebnissignal (co1-con) einer GrenzprüfungsAusgangszelle (BO1-BOn) eingespeist ist.

2. Integrierter elektronischer Baustein nach Anspruch 2,
**dadurch gekennzeichnet, dass** die Vergleichereinrichtung (VGL) zumindest ein Vergleichermittel (CZ1) aufweist,
welchem einander entsprechende Ausgänge (ou0-1,ou1-1) der Kernschaltkreise, nämlich jeweils ein Ausgang jedes Kernschaltkreises (KK0,KK1), als Prüfeingänge (cpi) zugeführt sind und
von welchem her ein aus dem Vergleich dieser Ausgänge untereinander bestimmtes Vergleichsergebnissignal (co1) über ein Multiplexermittel (CMX) einer Grenzprüfungs-Ausgangszelle (BO1) eingespeist ist.

3. Integrierter elektronischer Baustein nach einem der Ansprüche 1 bis 3,
**gekennzeichnet durch** eine Steuerlogik (BSL) , die zumindest einen aus dem Baustein (ITC) herausgeführten Anschluss als Dateneingang (TDI) zur Eingabe von Befehlssignalen an die Steuerlogik (BSL) sowie zumindest einen Fehlersteuerungs-Ausgang (FIA), der mit einem Fehlersteuereingang (cx0,cx1) verbunden ist, aufweist, wobei die Steuerlogik dazu eingerichtet ist, die über den Dateneingang (TDI) eingegebenen Befehlssignale zu decodieren, daraus Befehle zur Fehlersteuerung abzuleiten und entsprechend diesen Befehlen an den zumindest einen Fehlersteuerung-Ausgang (FIA) zu legen.

4. Integrierter elektronische Baustein nach Anspruch 4,
**dadurch gekennzeichnet, dass** die Steuerlogik (BSL) als Teil der Grenzprüfungs-Testlogik des Bausteins und der Dateneingang (TDI) als Testdateneingang einer Testschnittstelle (TAP) der Grenzprüfungs-Testlogik ausgeführt ist.

5. Integrierter elektronischer Baustein nach einem der Ansprüche 1 bis 5,
**dadurch gekennzeichnet, dass** zumindest ein Fehlersteuereingang (cx0) eine Gruppe von Fehlereinspeisungen ansteuert, nämlich die Fehlereinspeisungen (XR0) von Prüfeingängen für parallele Ausgänge (ou0-1,...,ou0-n) eines der Kernschaltkreise (KK0).

6. Integrierter elektronischer Baustein nach Anspruch 6,
**dadurch gekennzeichnet, dass** für jeden der Kernschaltkreise (KK0,KK1) jeweils ein Fehlersteuereingang (cx0,cx1) vorgesehen ist, welcher eine Gruppe vow Fehlereinspeisungen (XR0,XR1) ansteuert.

## Claims

1. Integrated electronic component (ICT) having a number of terminals (INP, OUP), having
- at least two identical core circuits (KK0, KK1) which can be operated in synchronous operating mode, and having a comparator unit (VGL), to which the signals from mutually corresponding outputs (ou0-1, ou1-1; ...; ou0-n, ou1-n) from the core circuits (KK0, KK1) are fed via test inputs (cpi) for mutual comparison, which combines the local comparison result signals (co1-con), and which has a comparator output (vgs) to output a fault signal in the case of a lack of agreement between these signals,
- a hardware fault injector (XR0, XR1) for test purposes for each group of mutually corresponding outputs from the core circuits, a fault injector (xR0, XR1) which can be driven by at least one fault control input (cx0, cx1) being connected upstream of at least one of the test inputs (cpi) of the local comparator unit, boundary-scan test logic having a number of boundary-scan output cells (BO1, ..., BOn), whose inputs (oup-1, ..., oup-n) are in each case connected to an output (ou0-1, ..., ou0-n) of one of the core circuits and whose outputs are connected to terminals (OUP) led out of the component (ITC) as signal outputs, and also
- a multiplexer means (CMX) which is driven by the boundary-scan test logic and via which a local comparison result signal (co1-con) derived in the comparator unit (VGL) from test inputs (cpi) is injected into a boundary-scan output cell (BO1-BOn) for each group of mutually corresponding outputs from the core circuits.

2. Integrated electronic component according to Claim 1, **characterized in that** the comparator unit (VGL) has at least one comparator means (CZ1),
to which mutually corresponding outputs (ou0-1, ou1-1) from the core circuits, specifically in each case an output from each core circuit (KK0, KK1) are fed as test inputs (cpi), and
from which a comparison result signal (col) determined from a comparison of these outputs with one another is injected via a multiplexer means (CMX) into a boundary-scan output cell (BO1).

3. Integrated electronic component according to either of Claims 1 and 2,
**characterized by** control logic (BSL), which has at least one terminal led out of the component (ITC) as a data input (TDI) for the input of command signals to the control logic (BSL), and also at least one fault control output (FIA), which is connected to a fault control input (cx0, cx1), the control logic being set up to decode the command signals input via the data input (TDI), to derive fault control commands from them and to apply these commands to the at least one fault control output (FIA) in accordance with these commands.

4. Integrated electronic component according to Claim 3,
**characterized in that** the control logic (BSL) is designed as part of the boundary-scan test logic of the component, and the data input (TDI) is designed as a test data input of a test interface (TAP) of the boundary-scan test logic.

5. Integrated electronic component according to one of Claims 1 to 4,
**characterized in that** at least one fault control input (cx0) controls a group of fault injectors, specifically the fault injectors (xR0) of test inputs for parallel outputs (ou0-1, ..., ou0-n) from one of the core circuits (KK0).

6. Integrated electronic component according to Claim 5, **characterized in that** a fault control input (cx0, cx1), which controls a group of fault injectors (XR0, XR1), is in each case provided for each of the core circuits (KK0, KK1).

## Revendications

1. Module électronique intégré (ICT) doté d'une pluralité de connexions (INP, OUP), comprenant
- au moins deux circuits centraux (KK0, KK1) du même type, pouvant être exploités en mode de fonctionnement synchrone ainsi qu'un dispositif comparateur (VGL), auquel les signaux de sorties (ou0-1 ou1-1 ; ... ; ou0-n, ou1-n) correspondant entre elles des circuits centraux (KK0, KK1) sont amenés, par l'intermédiaire d'entrées de contrôle (cpi), pour la comparaison mutuelle, lequel regroupe les signaux locaux du résultat de comparaison (co1 - con) et lequel présente une sortie de comparateur (vgs) pour la sortie d'un signal d'erreur en cas d'une concordance insuffisante de ces signaux,
- une introduction d'erreur de matériel (XR0, XR1) à des fins de contrôle pour chaque groupe de sorties correspondant entre elles des circuits centraux, une introduction d'erreur (XR0, XR1) étant connectée en amont d'au moins de l'une des entrées de contrôle (cpi) du dispositif comparateur local, cette introduction d'erreur pouvant être activée par au moins une entrée de commande d'erreur (cx0, cx1)
- une logique de test à contrôle limite dotée d'une pluralité de cellules de sortie à contrôle limite (BO1, ..., BOn), dont les entrées, (oup-1, ..., oup-n) sont respectivement connectées à une sortie (ou0-1, ..., ou0-n) de l'un des circuits centraux et dont les sorties sont connectées aux connexions (OUP) menées hors du module (ITC) comme sorties de signal, ainsi que
- un moyen de multiplexage (CMX) commandé par la logique de test à contrôle limite, au moyen duquel un signal du résultat de comparaison (co1 - con) d'une cellule de sortie à contrôle limite (BO1 - BOn) dérivé d'entrées de contrôle (cpi) dans le dispositif comparateur (VGL) est alimenté pour chaque groupe de sorties correspondant entre elles des circuits centraux.

2. Module électronique intégré selon la revendication 2, **caractérisé en ce que** le dispositif comparateur (VGL) présente au moins un moyen de comparateur (CZ1),
auquel des sorties (ou0-1, ou1-1) correspondant entre elles des circuits centraux, à savoir respectivement une sortie de chaque circuit central (KK0, KK1), sont amenées comme entrées de contrôle (cpi) et
duquel un certain signal du résultat de comparaison (co1) provenant de la comparaison de ces sorties est alimenté par un moyen de multiplexage (CMX) d'une cellule de sortie à contrôle limite (BO1).

3. Module électronique intégré selon l'une quelconque des revendications 1 à 3,
**caractérisé par** une logique de commande (BSL), qui présente au moins une connexion sortie du module (ITC), comme entrée de données (TDI) pour l'entrée de signaux d'instruction à la logique de commande (BSL) ainsi qu'au moins une sortie de commande d'erreur (FIA) connectée à une entrée de commande d'erreur (cx0 cx1), la logique de commande étant équipée pour décoder les signaux d'instruction entrés par l'intermédiaire de l'entrée de données (TDI), pour en dériver des instructions pour la commande d'erreur et pour les mettre sur au moins l'une des sorties de commande d'erreur (FIA) conformément à ces instructions.

4. Module électronique intégré selon la revendication 4,
**caractérisé en ce que** la logique de commande (BSL) est exécutée comme partie de la logique de test à contrôle limite du module et de l'entrée de données (TDI) comme entrée de données test d'une interface de test (TAP) de la logique de test à contrôle limite.

5. Module électronique intégré selon l'une quelconque des revendications 1 à 5,
**caractérisé en ce qu'**au moins une entrée de commande d'erreur (cx0 active un groupe d'introductions d'erreur, à savoir les introductions d'erreur (XR0) d'entrées de vérification pour les sorties parallèles (ou0-1, ..., ou0-n) de l'un des circuits centraux (KK0).

6. Module électronique intégré selon la revendication 6,
**caractérisé en ce qu'**une entrée de commande d'erreur (cx0, cx1) est respectivement prévue pour chacun des circuits centraux (KK0, KK1), laquelle active un groupe d'introductions d'erreur (XR0, XR1).
